# EUROPEAN PATENT SPECIFICATION

(11) **EP 3 060 520 B1**
(45) Date of publication and mention of the grant of the patent: **18.07.2018**
(21) Application number: 13798725.1
(22) Date of filing: 22.10.2013
(51) Int. Cl.: E21B 43/16, H01M 8/06, C01B 32/50

(54) **ENERGY-EFFICIENT METHOD FOR PRODUCING COMPRESSED CARBON DIOXIDE SUITABLE FOR ENHANCED OIL OR GAS RECOVERY**
ENERGIEEFFIZIENTES VERFAHREN ZUR HERSTELLUNG VON KOMPRIMIERTEM KOHLENDIOXID FÜR VERSTÄRKTE ÖL- ODER GASGEWINNUNG
PROCÉDÉ, À FAIBLE CONSOMMATION D'ÉNERGIE, DE PRODUCTION DE DIOXYDE DE CARBONE COMPRIMÉ APPROPRIÉ POUR UNE RÉCUPÉRATION AMÉLIORÉE D'HYDROCARBURES OU DE GAZ

(43) Date of publication of application: 31.08.2016
(73) Proprietor: Energy Research Institute, Riyadh 11442 (SA)
(72) Inventor: ALYOUSEF, Yousef, M., Riyadh 11442 (SA); ALENAZEY, Feraih, Riyadh 11442 (SA)
(74) Representative: Dr. Graf & Partner AG
(86) International application number: PCT/IB2013/002375
(87) International publication number: WO 2015/059507

(56) References cited:
- WO-A1-2004/054029
- WO-A2-2013/074875
- US-A1- 2013 126 038

## Description

### Field of the Invention

The field of invention relates to an energy-efficient method for producing purified, compressed carbon dioxide suitable for enhanced oil or gas recovery (EOR/EGR) using a SOFC unit.

### Background of the Invention

Enhanced Oil Recovery (EOR) is a generic term for techniques for increasing the amount of crude oil that can be extracted from an oil field. The term Enhanced Gas Recovery (EGR) is a generic term for techniques for increasing the amount of natural gas that can be extracted e.g. from a nearly depleted gas filed. There currently are several different methods of Enhanced Oil Recovery including steam flood and water flood injection and hydraulic fracturing. Enhanced oil recovery extraction methods consume large quantities of water, natural gas and energy. Gas injection or miscible flooding is presently the most-commonly used approach in enhanced oil recovery. The fluid most commonly used for miscible displacement is carbon dioxide because it reduces the oil viscosity and is less expensive than liquefied petroleum gas. Carbon dioxide is particularly effective in reservoirs deeper than 600 m, where carbon dioxide will be in a supercritical state. In high pressure applications with lighter oils, carbon dioxide is miscible with the oil, with resultant swelling of the oil, and reduction in viscosity. Carbon Dioxide as a solvent has the benefit of being more economical than other similarly miscible fluids such as propane and butane.

Document WO2013/074875A2 discloses a system and a method for producing a purified carbon dioxide product suitable for enhanced oil recovery using a vaporous hydrocarbon feed and a SOFC system. This method allows capturing and refining carbon dioxide for use in enhanced oil recovery, instead of disposing the carbon dioxide. This method in addition allows providing electrical power at remote locations. One disadvantage of this method is that the method is not energy-efficient so that additional resources and products are needed to run the process.

Document WO2004/054029A1 discloses a method for exhaust gas treatment in a solid oxide fuel cell power plant. Particularly, this method relates to solutions for recovering and recycling the unspent fuel from the anode fuel exhaust gas. The main SOFC stack is divided into an anode section and a cathode section by a sealing system. This seal system is a steam seal, so that addition of steam is needed for this particular seal. One disadvantage of this method is that the method is not energy-efficient so that additional resources and products are needed to run the process.

Document US2006/0115691A1 discloses a method for exhaust gas treatment in a solid oxide fuel cell power plant with carbon dioxide capture, in which the unreacted fuel in the anode exhaust is recovered and recycled, while the resulting exhaust stream consists of highly concentrated carbon dioxide. One disadvantage of this method is that the method is not energy-efficient so that additional resources and products are needed to run the process.

### Technical Problem to be solved

The objective of the present invention is thus to provide an energy-efficient method for producing purified, compressed carbon dioxide suitable for enhanced oil recovery from a hydrocarbon feed.

It is also an objective of the present invention to provide a method for producing purified, compressed carbon dioxide in a stand-alone unit, most preferably in a portable stand-alone unit.

It is also an objective of the present invention to provide an energy-efficient method for producing purified, compressed carbon dioxide suitable for enhanced oil recovery from a hydrocarbon feed, wherein the method in addition produces a surplus of at least one of water, hydrogen and electrical power.

### Summary of the Invention

The above-identified objectives are solved by a method comprising the features of claim 1 and more particular by a method comprising the features of claims 2 to 12. The objective is in particular solved by an energy-efficient method for producing purified, compressed carbon dioxide suitable for enhanced oil or gas recovery (EOR/EGR) and electricity from a gaseous hydrocarbon feed using a SOFC system, the method comprising the steps of:
- introducing the gaseous hydrocarbon feed into the SOFC system (1), wherein the gaseous hydrocarbon feed is a sweet gas or wherein the SOFC system is operating such that the SOFC system generates a sweet gas;
- adding a recycled anode off gas comprising hot steam to the sweet gas;
- introducing the sweet gas comprising hot steam into a reformer of the SOFC system;
- in the reformer, generating a reformed process gas by at least partially converting methane and steam into carbon monoxide and hydrogen;
- passing the reformed process gas from the reformer into the solid oxide fuel cell;
- in the solid oxide fuel cell, converting hydrogen and carbon monoxide of the reformed process gas in combination with oxygen into an anode off-gas comprising steam and carbon dioxide and into a depleted air;
- separating the anode off-gas into a recycled anode off-gas and a remaining off-gas;
- cooling the recycled anode off-gas down to a temperature in the range of above condensation temperature and 200 °C and, after cooling, pumping the recycled anode off gas,
- recycling the recycled anode off-gas above condensation temperature to provide the recycled anode off gas comprising hot steam;
- passing the remaining anode off-gas into a water-gas shift unit;
- in the water-gas shift unit, converting carbon monoxide and steam into carbon dioxide and hydrogen, to create a shifted anode off-gas;
- passing the shifted anode off-gas from the water-gas shift unit into a separation system;
- in the separation system, separating carbon dioxide from the shifted anode off-gas, wherein the carbon dioxide is compressed in a compressor to provide compressed carbon dioxide.

In the most preferred embodiment and method according to the invention the method may be run autonomous, stand-alone, which means no other supply than a hydrocarbon fuel and air is needed. The method is energetically self-sufficient, and the necessary feeds, heat and power required for running the process are produced internally in the system from the inputs, which are a gaseous hydrocarbon and air. A sweetened hydrocarbon feed gas is preferred as input gas, but the system may also be built and operating such that it first converts the received hydrocarbon feed into a sweetened hydrocarbon feed. Most preferably the method according to the invention allows operating a stand-alone, portable SOFC system for enhanced oil recovery (EOR) or enhanced gas recovery (EGR), requiring a sweetened hydrocarbon fuel and air as sole inputs and delivering as output purified and pressurized CO₂, and optionally may deliver as output also at least one of electrical power, hydrogen and water. The method according to the invention allows a very energy efficient conversion of the hydrocarbon fuel. In the most preferred embodiment the solid oxide fuel cell SOFC produces an amount of electrical power sufficient to run the whole SOFC unit autonomous regarding electrical energy, which means the electrical power is sufficient to run the pumps, compressors, heat exchangers, control units and other equipment necessary to run the method. This combination of energy efficient conversion of the hydrocarbon fuel and production of sufficient electrical power within the system enables an autonomous operation of the system.

The method according to the invention produces purified carbon dioxide, preferably with a purity of at least 95 mole percent, and preferably with a pressure of at least 100 bar, and more preferably with a pressure of at least 150 bar. Such purity is preferable for EOR or EGR because it minimizes the likeliness of unknown or undesirable reactions in the hydrocarbon-bearing formation.

In the most basic embodiment of the SOFC system according to the invention, beside hydrocarbon and air, no additional input is needed to run the method according to the invention. Because hydrocarbon and air is always available on sites the system is used and the method is run, the SOFC system according to the invention is very easy to handle and very convenient to run, because no expensive infrastructure and additional supply is required.

Various objects, features, aspects and advantages of the present invention will become more apparent from the following detailed description of preferred embodiments of the invention, along with the accompanying drawings in which like numerals represent like components.

### Brief Description of the Drawings

- Fig. 1: shows a schematic representation of a portable unit comprising a container and a series of inlets and outlets;
- Fig. 2: shows a process flow diagram of an embodiment of a SOFC arranged in a portable unit;
- Fig. 3: shows a process flow diagram of a further embodiment of a SOFC system.

### Description of preferred Embodiments

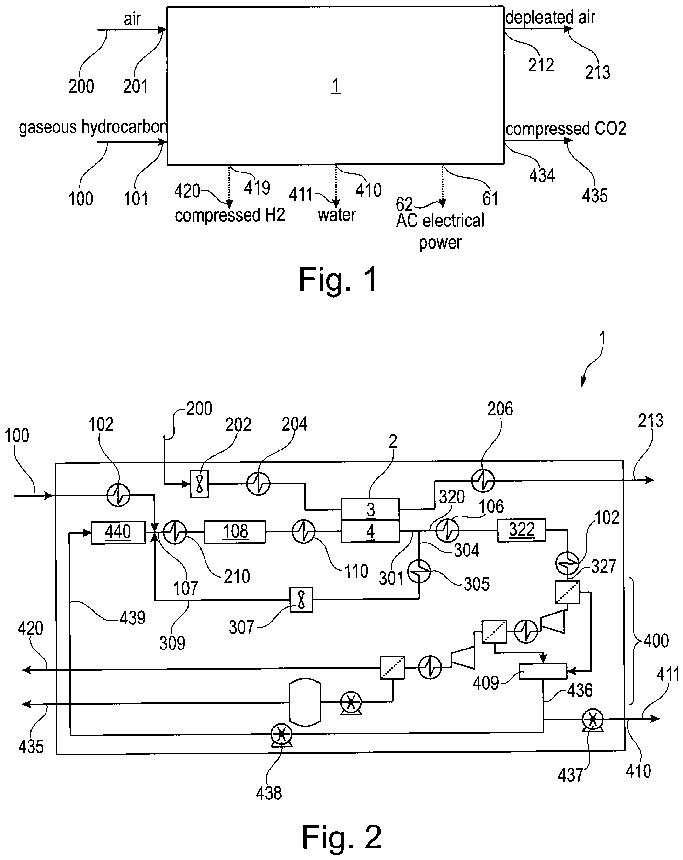

Fig. 1 shows the most preferred embodiment of the invention, a portable SOFC system 1, which could for example be confined within a container. The SOFC system 1 comprises an air inlet 201 to enter air 200 as well as a hydrocarbon inlet 101 to enter a gaseous hydrocarbon 100. The SOFC system 1 further comprises a carbon dioxide outlet 434 providing compressed carbon dioxide 435 and comprises a depleted air outlet 212 to vent depleted air 213. In the most basic embodiment of the invention no additional input is needed to run the method according to the invention. The system is stand-alone, which means that the SOFC system 1 is energetically self-sufficient, which means that the material, heat and power required for the process are produced internally from using the sweet gaseous hydrocarbon input and the air input.

The system and method produces compressed carbon dioxide 435 from a sweet associated gas or any sweet gaseous hydrocarbon, whereby sweet means desulfurized, and air. The compressed carbon dioxide 435 is produced with a required purity and pressure for injection in an oil or gas well for enhanced oil or gas recovery. In a preferred embodiment, the SOFC system 1 may also comprise an electrical output 61 to deliver electrical power 62, and/or may comprise a water outlet 410 to provide water 411, and/or may comprise a compressed hydrogen outlet 419 to provide compressed hydrogen 420. The amount of surplus electrical power and/or water and/or hydrogen the SOFC system 1 is able to deliver may depend on respective design parameters of the SOFC system 1.

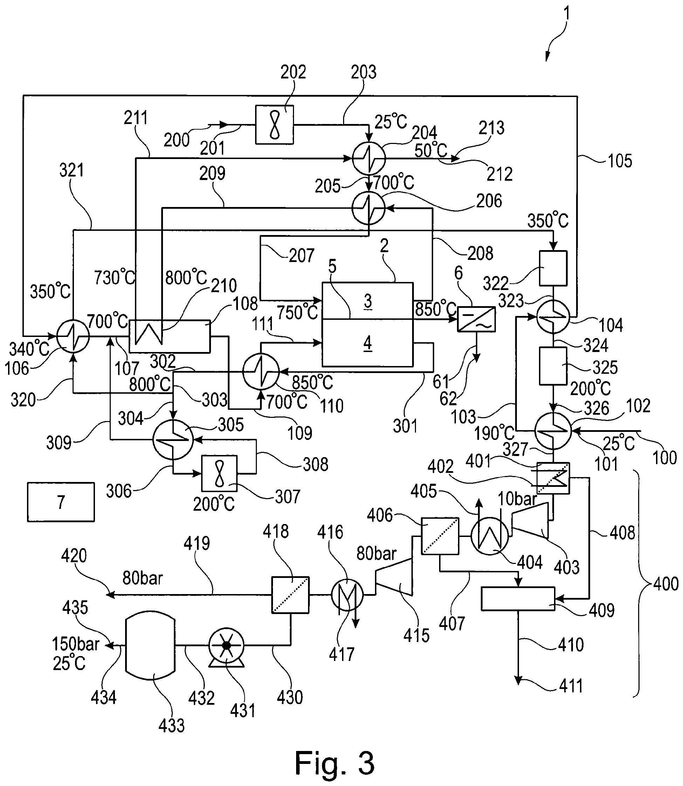

An exemplary configuration of a process flow diagram, that is also suitable for the SOFC system 1 according to figure 1, is depicted in figure 3. The inventor discovered that a gaseous hydrocarbon and air is sufficient to run a SOFC system 1 for producing compressed carbon dioxide suitable for enhances oil and gas recovery. Depending on the design of the method, the SOFC system 1 in addition is able to provide surplus of at least one of electrical power, water and hydrogen. The configuration depicted in figure 3 may not only be used in an autonomous, standalone system as disclosed in figure 1, but also as part of a larger facility. In such a case, some resources such as the electrical power could be provided from outside the SOFC system 1.

A gaseous hydrocarbon feed 100 is introduced at the gaseous hydrocarbon inlet 101, wherein the gaseous hydrocarbon feed 100 is a sweet gas 105 or wherein the gaseous hydrocarbon feed 100 is desulfurized to become a sweet gas 105. The gaseous hydrocarbon feed 100 could either be natural gas or any associated gas produced at a well bearing. The optional desulfurization process is not shown in Figure 3. The gaseous hydrocarbon feed 100 proceeds to a first heat exchanger 102, then through a gas conduit 103 to a second heat exchanger 104, and then the sweet gas 105 proceed through a further gas conduit to a third heat exchanger 106. By way of example, the gaseous hydrocarbon feed 100 may have a temperature of 25°C when entering the first heat exchanger 102, may have a temperature of 190°C when leaving the first heat exchanger 102, and the sweet gas 105 may have a temperature of 340°C when leaving the second heat exchanger 104 and a temperature of 700 °C when leaving the third heat exchanger 106. After leaving the third heat exchanger 106 the sweet gas 105 is mixed with a recycled anode off gas 309 comprising hot steam and the resulting process gas with recycled anode off gas 107 enters a reformer 108 that allows conversion of the sweet gas into a reformate composed mainly of hydrogen, carbon monoxide and in an minor portion steam, carbon dioxide and methane. The reformer 108 uses steam, air or carbon dioxide as a reforming agent, or a mixture of them. The reaction takes place in the presence of a reforming catalyst in the temperature range of 500 - 800 °C and is either endothermic or exothermic, depending on the reforming agent. In the embodiment disclosed the reaction in the reformer 108 is endothermic, and the reforming agent is steam and carbon dioxide. In the embodiment disclosed a heat exchanger 210 is used to provide additional heat for the reaction. The reformed process gas 109 leaving the reformer 108 is then heated in a heat exchanger 110 from 700 °C to 750°C, before entering the anode side 4 of a solid oxide fuel cell SOFC 2.

Air 200 is introduced at the air inlet 201 and slightly compressed by a blower 202 before the compressed cold air 203 is feed to two heat exchangers 204, 206 arranged in series, so that a hot air 207 is obtained, which is fed to the cathode side 3 of the solid oxide fuel cell SOFC 2. By way of example, the air may have a temperature of 25°C when entering the heat exchanger 204, may have a temperature of 700°C when entering the consecutive heat exchanger 206, and the hot air 207 may have a temperature of 750 °C.

The solid oxide fuel cell 2 converts parts of the reformed process gas 111, also called reformate, and oxygen contained in the hot air 207 into electrical power and heat. The anode side 4 of the solid oxide fuel cell SOFC 2 is fed with reformed process gas 111, the cathode side 3 of the solid oxide fuel cell SOFC 2 is fed with hot air 207, and oxygen is transferred from the cathode side 3 to the anode side 4 through electrolyte 5, so that the known reaction takes place in the solid oxide fuel cell SOFC 2. The heat generated in the solid oxide fuel cell 2 is mainly transferred in two hot gas streams, i.e. a depleted air stream 208 and an anode off-gas 301. The fraction of converted reformate, i.e. the fuel utilization, is a design parameter but should be sufficiently high (>60%) for an effective use of the solid oxide fuel cell SOFC 2. Beside power production, the function of the solid oxide fuel cell SOFC 2 is to transfer oxygen to the reformate for CO₂ production.

The depleted air stream 208 is routed to heat exchangers 206, 210, 204 by depleted air conduits 209, 211, before exiting the SOFC system 1 at the depleted air outlet 212 as depleted air 213. By way of example, the depleted air stream 208 leaving the solid oxide fuel cell SOFC 2 may have a temperature of 850°C, is then cooled down in the heat exchanger 206 to 800°C, is then further cooled down in heat exchanger 201 to 730°C and is then further cooled down in heat exchanger 204 to 50°C.

The electrical power is converted in an inverter 6 from DC to AC, and the electrical power is available for use within the SOFC system 1, and if there is a surplus, such electrical power 62 is available at an electrical output 61.

The anode off gas 301 comprising steam is separated into a recycled anode off-gas 304 and a residual off-gas 320, so that the anode off gas 301 is partially recycled as a recycled anode off gas comprising hot steam 309, which is combined with the sweet gas 105 so that a process gas with recycled anode off gas 107 is created. In the embodiment disclosed in Figure 3, the anode off gas 301 flowing through heat exchanger 110 is split in separator 303 into two streams, a recycled anode off gas 304 and a residual anode off gas 320. The recycled anode off gas 304 flows through heat exchanger 305, conduit 306, pump 307, conduit 308 before joining the sweet gas 105 as recycled anode off gas comprising hot steam 309. By way of example, the anode off gas 301 leaving the solid oxide fuel cell SOFC 2 may have a temperature of 850°C, is then cooled down in the heat exchanger 110 to 800°C, is then further cooled down in heat exchanger 305 to 200°C, which is above condensation temperature, and is then further warmed up in heat exchanger 305 to 700 °C. This embodiment may for example use a membrane pump 307 to pump the recycled anode off case 304. Most important is that the anode off gas 301 is recycled as anode off gas comprising hot steam 309 above condensation temperature. It is therefore avoided that steam is condensed into water. The recycling of the anode off gas above condensation has the advantage that no additional energy is needed for the evaporation and superheating of the hot steam 309, so that the process may run very energy efficient.

The residual off gas 320 is routed to a CO₂-separation sub-unit, which converts the remaining CO into CO₂ and separates the latter from the other gases, i.e. steam and hydrogen. There are many different options for this sub-unit:
a. Oxy-post-combustion of CO to CO₂ and H2 to H₂O followed by water separation by condensation. The required pure oxygen is either produced by a SOFC with special electrodes, an electrolyser or oxygen separation membrane;
b. CO oxidation through the water gas shift reaction (WGS: CO + H₂O = CO₂ + H₂) in presence of steam between 300°C and 190°C. The use of a membrane reactor, i.e. a WGS reactor coupled with a H₂ or CO₂ permeation membrane, is particularly interesting since it allows to displace the equilibrium of the reaction towards full conversion of CO and enables to separate H₂ and CO₂, while steam is separated by condensation upon cooling;
c. Alternatively, gas separation technologies can be used such as pressure swing adsorption (PSA), selective membranes or cryogenic distillation.

In the embodiment disclosed in Figure 3, the residual off gas 320 is routed to the third cooler 106, and then flows through an anode off gas conduit 321 to a high temperature water-gas shift reactor 322 to become a shifted anode off-gas 324, flows then through the second heat exchanger 104 and a conduit 324 to a low temperature water-gas shift reactor 325 followed by a conduit 326 and the first heat exchanger 102, to become a cooled shifted anode off-gas 327.

The cooled shifted anode off-gas 327 is routed to a separation system 400 consisting of a series of compression and cooling steps to separate water, hydrogen and carbon dioxide. The cooled shifted anode off gas 327 enters a water separator 401 with auxiliary cooling 402, wherein water condensate 408 is separated. The remaining cooled shifted anode off gas 327 is then compressed in a compressor 403, cooled in a heat exchanger 404 with auxiliary cooling 405 and then introduced in a further water separator 406, wherein water condensate 407 is separated. The separated water 407, 408 is collected in a water tank 409 and the water 411 may be available at a water outlet 410. The remaining cooled shifted anode off gas 327 is compressed in a compressor 415, cooled in a heat exchanger 416 with auxiliary cooling 417 and flowing in a separator 418, wherein the fluid is separated into a compressed hydrogen 420, which may be available at a compressed hydrogen outlet 419, and into a supercritical carbon dioxide 430, which by a pump 431 and conduit 432 is pumped into a carbon dioxide storage tank 433. The compressed carbon dioxide 435 may be available at a carbon dioxide outlet 434. By way of example, the cooled shifted anode off-gas 327 may have a pressure of 10 bar when leaving the compressor 403, and may have a pressure of 80 bar when leaving the compressor 415, so that the compressed hydrogen 420 has a pressure of 80 bar, whereby the carbon dioxide is further compressed by pump 431, so that the compressed carbon dioxide 435 may have a pressure of 150 bar.

In the most preferred embodiment, the SOFC system 1 is designed to operate autonomous, the only supply being fuel and air. The electrical power generated by inverter 6 must therefore be sufficient to run the whole SOFC system 1. By way of example the electrical power generated by the inverter electrical output 61 in relative terms is 100%. In an exemplary embodiment of SOFC system 1, the electrical power consumption in relative terms is as follows:
- blower 202: 7%
- recycling pump 307: 0,4%
- auxiliary cooling 402: 0,5%
- auxiliary cooling 405: 0,5%
- auxiliary cooling 417: 1,2%
- compressor 403, compressor 415 and pump 431 in total: 7.7%

A total of 17,3% of the available electrical power is needed to run the above mentioned units. Some additional power is needed to run control unit 7, which controls all units of the SOFC system 1, in particular the units consuming electrical power.

Figure 2 shows a further embodiment of the invention. However, other configurations can be considered as long as the requirements of product quality and self-sufficiency are satisfied, and in particular as long as the recycled anode off gas 304 is recycled above condensation temperature.
The gaseous hydrocarbon 100 is heated in heat exchanger 102 and is mixed with steam from evaporator 440 and recycled anode off gas 309 to create the process gas with recycled anode off gas 107. The process gas with recycled anode off gas 107 is converted in the steam reformer 108 at 700°C, is heated in heat exchanger 110, and fed to the anode side 4 of the solid oxide fuel cell SOFC 2 that operates at 750°C and 60% fuel utilization FU. Part of the exhaust anode gas 301, for example 60%, is re-circulated as recycled anode off gas 304 to the reformer 108. The remaining anode gas 320 is fed through heat exchangers 106, 102 and a series of two water-gas-shift reactors 322 to convert the remaining CO with steam into CO₂ and H₂. The resulting gas, the cooled shifted anode off-gas 327, is then fed to the separation system 400, the same system as disclosed in figure 3, to cool down the cooled shifted anode off-gas 327 to for example 40°C to condensate the main part of the steam into water before experiencing a series of compression-cooling-separation stages. The residual water or steam is condensed and separated after the first stage. The CO₂, which represents for example 58% of the gas stream is further compressed, liquefied and separated in the following stages. Water is collected in water tank 409. The water tank 409 is by water conduit 436 connected to water pump 437, which pressurizes the water 411 of the water outlet 410. In the embodiment disclosed the water conduit 436 is also connected with a pump 438, followed by a water conduit 439 which is connected with an evaporator 440. This embodiment allows providing the process gas with recycled anode off gas 107 with additional steam. Such an embodiment might be advantageous to fulfill a steam balance criterion, in order to satisfy an advantageous oxygen-to-carbon ratio, for example of 2.4, which is required in the reformer 108 to avoid carbon formation. As disclosed in figure 3, the separation system 400 disclosed in figure 2 also produces compressed carbon dioxide at a pressure of 150bar.

## Claims

1. An energy-efficient method for producing purified, compressed carbon dioxide (435) suitable for enhanced oil or gas recovery (EOR/EGR) and electricity from a gaseous hydrocarbon feed (100) using a SOFC system (1), the method comprising the steps of:
- introducing the gaseous hydrocarbon feed (100) into the SOFC system (1), wherein the gaseous hydrocarbon feed (100) is a sweet gas (105) or wherein the SOFC system (1) is operating such that the SOFC system (1) generates a sweet gas (105);
- adding a recycled anode off gas comprising hot steam (309) to the sweet gas (105);
- introducing the sweet gas (105) comprising hot steam into a reformer (108) of the SOFC system (1);
- in the reformer (108), generating a reformed process gas (109) by at least partially converting methane and steam into carbon monoxide and hydrogen;
- passing the reformed process gas (109) from the reformer (108) into the solid oxide fuel cell (2);
- in the solid oxide fuel cell (2), converting hydrogen and carbon monoxide of the reformed process gas (109) in combination with oxygen into an anode off-gas (301) comprising steam and carbon dioxide and into a depleted air (208);
- separating the anode off-gas (301) into a recycled anode off-gas (304) and a remaining off-gas (320);
- cooling the recycled anode off-gas (304) down to a temperature in the range of above condensation temperature and 200 °C and, after cooling, pumping the recycled anode off gas (304, 306),
- recycling the recycled anode off-gas (304) above condensation temperature to provide the recycled anode off gas comprising hot steam (309);
- passing the remaining anode off-gas (320) into a water-gas shift unit (322);
- in the water-gas shift unit (322), converting carbon monoxide and steam into carbon dioxide and hydrogen, to create a shifted anode off-gas (326);
- passing the shifted anode off-gas (326) from the water-gas shift unit (322) into a separation system (400);
- in the separation system (400), separating carbon dioxide from the shifted anode off-gas (326), wherein the carbon dioxide is compressed in a compressor (403, 415) to provide compressed carbon dioxide (435).

2. The method of claim 1, the method further comprising the steps of:
- introducing air (200) into the SOFC system (1);
- heating the air (200) in a heat exchanger (204, 206) by using the depleted air (208) to a temperature in the range of from 700 °C to 1000 °C, and providing the hot air (207) comprising oxygen to the solid oxide fuel cell (2).

3. The method of claim 1 or 2, the method further comprising the steps of:
- using the remaining anode off-gas (320) for heating the gaseous hydrocarbon feed (100) in a heat exchanger (102, 104, 106) to a temperature in the range of from 500°C to 800°C.

4. The method of claim 3, the method further comprising the steps of:
- heating the reformer (108) by using the depleted air (208) to provide the necessary heat for the reforming reaction in the reformer (108).

5. The method of one of claims 1 to 4, the method, after pumping the recycled anode off gas (304, 306), further comprising the steps of:
heating the recycled anode off gas (304, 306, 308) to a temperature in the range of from 500 °C to 800 °C to form the recycled anode off gas comprising hot steam (309).

6. The method of claim 5, wherein the recycled anode off gas (306) is pumped by a membrane pump (307).

7. The method of claim 5 or 6, wherein the recycled anode off gas (308) is heated by using the recycled part of the anode off-gas (304).

8. The method of one of claims 5 to 7, wherein the solid oxide fuel cell SOFC (2) produces electricity in an amount sufficient to run all electric equipment of the SOFC system (1), which at least comprises the blower (202), a recirculating system (307), an auxiliary cooling system (402, 404, 416), the compressor (403, 415) and a control unit (7) of the SOFC system (1).

9. The method of claim 8, wherein the SOFC system (1) runs autonomous, only needing the gaseous hydrocarbon feed (100) and air (200).

10. The method of any one of the preceding claims, wherein the carbon dioxide (435) is compressed to a pressure in the range of 100 to 200 bar.

11. The method of any one of the preceding claims, wherein the separation system (400) in addition is separating water (411) from the shifted anode off-gas (326).

12. The method of any one of the preceding claims, wherein the separation system (400) in addition is separating hydrogen (420) from the shifted anode off-gas (326).

13. SOFC system (1) operated according to a method of one of the previous claims, for the combined production of electrical power and compressed carbon dioxide (435) from gaseous hydrocarbon feed (100) and air (200).

## Patentansprüche

1. Energieeffizientes Verfahren zur Herstellung von gereinigtem, komprimiertem Kohlendioxid (435), das für verbesserte Öl- oder Gasgewinnung (EOR/EGR) und Elektrizität aus einem gasförmigen Kohlenwasserstoff-Einsatzmaterial (100) unter Verwendung eines SOFC-Systems (1) geeignet ist, wobei das Verfahren die Schritte umfasst:
- Einführen des gasförmigen KohlenwasserstoffEinsatzmaterials (100) in das SOFC-System (1), wobei das gasförmige Kohlenwasserstoff-Einsatzmaterial (100) ein Süssgas (105) ist oder wobei das SOFC-System (1) so arbeitet, dass das SOFC-System (1) ein Süssgas (105) erzeugt;
- Zugeben eines rückgeführten Anodenabgases, das heissen Dampf (309) umfasst, zu dem Süssgas (105);
- Einführen des Süssgases (105), das heissen Dampf umfasst, in einen Reformer (108) des SOFC-Systems (1);
- in dem Reformer (108) Erzeugen eines reformierten Prozessgases (109) durch wenigstens teilweises Umwandeln von Methan und Dampf zu Kohlenmonoxid und Wasserstoff;
- Leiten des reformierten Prozessgases (109) von dem Reformer (108) in die Festoxid-Brennstoffzelle (2);
- in der Festoxid-Brennstoffzelle (2) Umwandeln von Wasserstoff und Kohlenmonoxid des reformierten Prozessgases (109) in Kombination mit Sauerstoff zu einem Anodenabgas (301), das Dampf und Kohlendioxid umfasst, und einer verarmten Luft (208);
- Auftrennen des Anodenabgases (301) in ein rückgeführtes Anodenabgas (304) und ein restliches Abgas (320);
- Abkühlen des rückgeführten Anodenabgases (301) auf eine Temperatur in dem Bereich von über der Kondensationstemperatur bis 200 °C, und nach dem Abkühlen Pumpen des rückgeführten Anodenabgases (304, 306);
- Rückführen des rückgeführten Anodenabgases (304) über der Kondensationstemperatur, um das rückgeführte Anodenabgas, das heissen Dampf umfasst (309), bereitzustellen;
- Leiten des restlichen Anodenabgases (320) in eine Wassergas-Shift-Einheit (322);
- in der Wassergas-Shift-Einheit (322) Umwandeln von Kohlenmonoxid und Dampf zu Kohlendioxid und Wasserstoff, um ein umgeformtes Anodenabgas zu erzeugen (326);
- Leiten des umgeformten Anodenabgases (326) von der Wassergas-Shift-Einheit (322) in ein Trennsystem (400);
- in dem Trennsystem (400) Abtrennen des Kohlendioxids von dem umgeformten Anodenabgas (326), wobei das Kohlendioxid in einem Kompressor (403, 415) komprimiert wird, um komprimiertes Kohlendioxid (435) zu erhalten.

2. Verfahren gemäss Anspruch 1, wobei das Verfahren ferner die Schritte umfasst:
- Einführen von Luft (200) in das SOFC-System (1);
- Erhitzen der Luft (200) in einem Wärmetauscher (204, 206) unter Verwendung der verarmten Luft (208) auf eine Temperatur in dem Bereich von 700 °C bis 1000 °C und Zuführen der heissen Luft (207), die Sauerstoff umfasst, zu der Festoxid-Brennstoffzelle (2).

3. Verfahren gemäss Anspruch 1 oder 2, wobei das Verfahren ferner die Schritte umfasst:
- Verwenden des restlichen Anodenabgases (320) zum Erhitzen des gasförmigen KohlenwasserstoffEinsatzmaterials (100) in einem Wärmetauscher (102, 104, 106) auf eine Temperatur in dem Bereich von 500 °C bis 800 °C.

4. Verfahren gemäss Anspruch 3, wobei das Verfahren ferner die Schritte umfasst:
- Erhitzen des Reformers (108) unter Verwendung der verarmten Luft (208), um die notwendige Wärme für die Reformierungsreaktion in dem Reformer (108) bereitzustellen.

5. Verfahren gemäss einem der Ansprüche 1 bis 4, wobei das Verfahren nach dem Pumpen des rückgeführten Anodenabgases (304, 306) ferner die Schritte umfasst:
Erhitzen des rückgeführten Anodenabgases (304, 306, 308) auf eine Temperatur in dem Bereich von 500 °C bis 800 °C, um das rückgeführte Anodenabgas, das heissen Dampf (309) umfasst, zu bilden.

6. Verfahren gemäss Anspruch 5, wobei das rückgeführte Anodenabgas (306) durch eine Membranpumpe (307) gepumpt wird.

7. Verfahren gemäss Anspruch 5 oder 6, wobei das rückgeführten Anodenabgas (308) unter Verwendung des rückgeführten Teils des Anodenabgases (304) erhitzt wird.

8. Verfahren gemäss einem der Ansprüche 5 bis 7, wobei die Festoxid-Brennstoffzelle SOFC (2) Elektrizität in einer Menge erzeugt, die ausreicht, um die gesamte elektrische Ausrüstung des SOFC-Systems (1) zu betreiben, die wenigstens das Gebläse (202), ein Rückführungssystem (307), ein Hilfskühlsystem (402, 404, 416), den Kompressor (403, 415) und eine Steuereinheit (7) des SOFC-Systems (1) umfasst.

9. Verfahren gemäss Anspruch 8, wobei das SOFC-System (1) autonom läuft und nur das gasförmige Kohlenwasserstoff-Einsatzmaterial (100) und Luft (200) benötigt.

10. Verfahren gemäss einem der vorstehenden Ansprüche, wobei das Kohlendioxid (435) auf einen Druck in dem Bereich von 100 bis 200 bar komprimiert wird.

11. Verfahren gemäss einem der vorstehenden Ansprüche, wobei das Trennsystem (400) zusätzlich Wasser (411) von dem umgeformten Anodenabgas (326) abtrennt.

12. Verfahren gemäss einem der vorstehenden Ansprüche, wobei das Trennsystem (400) zusätzlich Wasserstoff (420) von dem umgeformten Anodenabgas (326) abtrennt.

13. SOFC-System (1), betrieben gemäss einem Verfahren gemäss einem der vorstehenden Ansprüche, für die kombinierte Herstellung von elektrischem Strom und komprimiertem Kohlendioxid (435) aus gasförmigem Kohlenwasserstoff-Einsatzmaterial (100) und
Luft (200).

## Revendications

1. Procédé écoénergétique pour la production de dioxyde de carbone purifié comprimé (435) convenant pour la récupération assistée de pétrole ou de gaz (RAP/RAG) et d'électricité à partir d'une charge d'hydrocarbures gazeux (100) à l'aide d'un système à SOFC (1), le procédé comprenant les étapes consistant à :
- introduire la charge d'hydrocarbures gazeux (100) dans le système à SOFC (1), la charge d'hydrocarbures gazeux (100) étant un gaz non corrosif (105) ou le système à SOFC (1) fonctionnant de façon telle que le système à SOFC (1) produit un gaz non corrosif (105) ;
- ajouter un dégagement gazeux anodique recyclé comprenant de la vapeur d'eau chaude (309) au gaz non corrosif (105) ;
- introduire le gaz non corrosif (105) comprenant de la vapeur d'eau chaude dans un reformeur (108) du système à SOFC (1) ;
- dans le reformeur (108), produire un gaz de procédé reformé (109) en convertissant au moins en partie du méthane et de la vapeur d'eau en monoxyde de carbone et en hydrogène ;
- faire passer le gaz de procédé reformé (109) du reformeur (108) vers la pile à combustible à oxyde solide (2) ;
- dans la pile à combustible à oxyde solide (2), convertir l'hydrogène et le monoxyde de carbone du gaz de procédé reformé (109) en association avec de l'oxygène en un dégagement gazeux anodique (301) comprenant de la vapeur d'eau et du dioxyde de carbone et en un air appauvri (208) ;
- séparer le dégagement gazeux anodique (301) en un dégagement gazeux anodique recyclé (304) et un dégagement gazeux anodique restant (320) ;
- refroidir le dégagement gazeux anodique recyclé (304) jusqu'à une température dans la plage allant d'une température au-dessus de la température de condensation à 200 °C et, après refroidissement, pomper le dégagement gazeux anodique recyclé (304, 306),
- recycler le dégagement gazeux anodique recyclé (304) au-dessus de la température de condensation pour fournir le dégagement gazeux anodique recyclé comprenant de la vapeur d'eau chaude (309) ;
- faire passer le dégagement gazeux anodique restant (320) dans une unité de conversion de gaz à l'eau (322) ;
- dans l'unité de conversion de gaz à l'eau (322), convertir du monoxyde carbone et de la vapeur d'eau en dioxyde de carbone et en hydrogène, pour créer un dégagement gazeux anodique converti (326) ;
- faire passer le dégagement gazeux anodique converti (326) de l'unité de conversion de gaz à l'eau (322) vers un système de séparation (400) ;
- dans le système de séparation (400), séparer du dioxyde de carbone du dégagement gazeux anodique converti (326), le dioxyde de carbone étant comprimé dans un compresseur (403, 415) pour fournir du dioxyde de carbone comprimé (435).

2. Procédé selon la revendication 1, le procédé comprenant en outre les étapes consistant à :
- introduire de l'air (200) dans le système à SOFC (1) ;
- chauffer l'air (200) dans un échangeur de chaleur (204, 206) à l'aide de l'air appauvri (208) à une température dans la plage de 700 °C à 1000 °C et fournir l'air chaud (207) comprenant de l'oxygène à la pile à combustible à oxyde solide (2).

3. Procédé selon la revendication 1 ou 2, le procédé comprenant en outre les étapes consistant à :
- utiliser le dégagement gazeux anodique restant (320) pour le chauffage de la charge d'hydrocarbures gazeux (100) dans un échangeur de chaleur (102, 104, 106) à une température dans la plage de 500 °C à 800 °C.

4. Procédé selon la revendication 3, le procédé comprenant en outre les étapes consistant à :
- chauffer le reformeur (108) à l'aide de l'air appauvri (208) pour fournir la chaleur nécessaire pour la réaction de reformage dans le reformeur (108) .

5. Procédé selon l'une des revendications 1 à 4, le procédé, après pompage du dégagement gazeux anodique recyclé (304, 306), comprenant en outre les étapes consistant à :
chauffer le dégagement gazeux anodique recyclé (304, 306, 308) à une température dans la plage de 500 °C à 800 °C pour former le dégagement gazeux anodique recyclé comprenant de la vapeur d'eau chaude (309).

6. Procédé selon la revendication 5, dans lequel le dégagement gazeux anodique recyclé (306) est pompé par une pompe à membrane (307).

7. Procédé selon la revendication 5 ou 6, dans lequel le dégagement gazeux anodique recyclé (308) est chauffé à l'aide de la partie recyclée du dégagement gazeux anodique (304).

8. Procédé selon l'une des revendications 5 à 7, dans lequel la pile à combustible à oxyde solide SOFC (2) produit de l'électricité en une quantité suffisante pour faire fonctionner tout le matériel électrique du système à SOFC (1), qui comprend au moins la soufflante (202), un système de recirculation (307), un système de refroidissement auxiliaire (402, 404, 416), le compresseur (403, 415) et une unité de commande (7) du système à SOFC (1).

9. Procédé selon la revendication 8, dans lequel le système à SOFC (1) fonctionne de manière autonome, ne nécessitant que la charge d'hydrocarbures gazeux (100) et de l'air (200).

10. Procédé selon l'une quelconque des revendications précédentes, dans lequel le dioxyde de carbone (435) est comprimé à une pression dans la plage de 100 à 200 bar.

11. Procédé selon l'une quelconque des revendications précédentes, dans lequel le système de séparation (400) de plus sépare de l'eau (411) du dégagement gazeux anodique converti (326).

12. Procédé selon l'une quelconque des revendications précédentes, dans lequel le système de séparation (400) de plus sépare de l'hydrogène (420) du dégagement gazeux anodique converti (326).

13. Système à SOFC (1) amené à fonctionner selon un procédé selon l'une des revendications précédentes, pour la production combinée d'énergie électrique et de dioxyde de carbone comprimé (435) à partir d'une charge d'hydrocarbures gazeux (100) et d'air (200).
